# EUROPEAN PATENT APPLICATION

(11) **EP 3 054 371 A1**
(43) Date of publication of application: **10.08.2016**
(21) Application number: 15154213.1
(22) Date of filing: 06.02.2015
(51) Int. Cl.: G06F 3/01, G06F 3/0481, G01C 21/36, G02B 27/01

(54) **Apparatus, method and computer program for displaying augmented information**

(71) Applicant: Nokia Technologies OY, 02610 Espoo (FI)
(72) Inventor: Laaksonen, Lasse Juhani, 33720 Tampere (FI); Lehtiniemi, Arto Juhani, 33720 Tampere (FI); Vilermo, Miikka Tapani, 33720 Tampere (FI); Tammi, Mikko Tapio, 33720 Tampere (FI)
(74) Representative: Swindell & Pearson Limited

(57) **Abstract**

An apparatus, method and computer program wherein the apparatus comprises: means for detecting an object external to the apparatus; means for adapting information to be displayed to a user of the apparatus to correspond to the detected object; and means for enabling the information to be displayed to the user so that the displayed information is aligned with the detected object.

## Description

### TECHNOLOGICAL FIELD

Examples of the present disclosure relate to apparatus, methods and computer programs which enable information to be displayed. In particular, examples of the present disclosure relate to apparatus, methods and computer programs which enable information to be displayed to a user in a vehicle.

### BACKGROUND

Apparatus which enable information to be displayed to a user are known. For instance many electronic devices comprise displays which enable information to be displayed.

It is useful to enable information to be displayed in a manner which enables a user to perform more than one task simultaneously. For instance, if a user is driving a vehicle it may be useful to enable the user to view the information and control the vehicle at the same time.

### BRIEF SUMMARY

According to various, but not necessarily all, examples of the disclosure there may be provided an apparatus comprising: means for detecting an object external to the apparatus; means for adapting information to be displayed to a user of the apparatus to correspond to the detected object; and means for enabling the information to be displayed to the user so that the displayed information is aligned with the detected object.

In some examples the apparatus may be configured to detect an object external to a vehicle.

In some examples the information may be displayed on at least one of; a windscreen, a visor, a near eye display.

In some examples the information may be displayed so that it appears to overlay the detected object.

In some examples the detected object may comprise a vehicle.

In some examples the information may be adapted to correspond to the detected object by adapting one or more of; size of information, shape of information, opaqueness of information, content of information.

In some examples the information may comprise information which may be selected by a user. In some examples the information may comprise information which is selected by an entity other than the user.

In some examples the information may comprise user control elements. The apparatus may comprise means for detecting selection of the user control elements.

In some examples the apparatus may further comprise means for detecting a user input and, in response to the detected user input, selecting an object external to the apparatus and enabling information to be displayed to the user so that the displayed information is aligned with the selected object.

In some examples the apparatus may further comprise means for monitoring gaze of user and adjusting position of displayed information in response to the gaze position.

In some examples the apparatus may further comprise means for determining that no suitable objects are positioned external to the apparatus and in response enabling the information to be displayed at a default position.

In some examples the apparatus may further comprise means for enabling displaying first information to a first user in a vehicle and enabling displaying second information to a second user in the same vehicle.

In some examples there may be provided an electronic device comprising an apparatus as claimed above.

According to various, but not necessarily all, examples of the disclosure there may be provided a method comprising: detecting an object external to the apparatus; adapting information to be displayed to a user of the apparatus to correspond to the detected object; and enabling the information to be displayed to the user so that the displayed information is aligned with the detected object.

In some examples the method may comprise detecting an object external to a vehicle.

In some examples of the method the information may be displayed on at least one of; a windscreen, a visor, a near eye display.

In some examples of the method the information may be displayed so that it appears to overlay the detected object.

In some examples of the method the detected object may comprise a vehicle.

In some examples of the method the information may be adapted to correspond to the detected object by adapting one or more of; size of information, shape of information, opaqueness of information, content of information.

In some examples of the method the information may comprise information which is selected by a user. In some examples the information may comprise information which is selected by an entity other than the user.

In some examples of the method the information may comprise user control elements. The method may further comprise detecting selection of the user control elements.

In some examples the method may further comprise detecting a user input and, in response to the detected user input, selecting an object external to the apparatus and enabling information to be displayed to the user so that the displayed information is aligned with the selected object.

In some examples the method may further comprise monitoring gaze of user and adjusting position of displayed information in response to the gaze position.

In some examples the method may further comprise determining that no suitable objects are positioned external to the apparatus and in response enabling the information to be displayed at a default position.

In some examples the method may further comprise enabling displaying first information to a first user in a vehicle and enabling displaying second information to a second user in the same vehicle.

According to various, but not necessarily all, examples of the disclosure there may be provided a computer program comprising computer program instructions that, when executed by processing circuitry, enable: detecting an object external to the apparatus; adapting information to be displayed to a user of the apparatus to correspond to the detected object; and enabling the information to be displayed to the user so that the displayed information is aligned with the detected object.

According to various, but not necessarily all, examples of the disclosure there may be provided a computer program comprising program instructions for causing a computer to perform methods as described above.

In some examples there may be provided a physical entity embodying the computer program as described above.

In some examples there may be provided an electromagnetic carrier signal carrying the computer program as described above.

According to various, but not necessarily all, examples of the disclosure there may be provided an apparatus comprising: processing circuitry; and memory circuitry including computer program code; the memory circuitry and the computer program code configured to, with the processing circuitry, cause the apparatus to, at least in part: detect an object external to the apparatus; adapt information to be displayed to a user of the apparatus to correspond to the detected object; and enable the information to be displayed to the user so that the displayed information is aligned with the detected object.

According to various, but not necessarily all, examples of the disclosure there may be provided examples as claimed in the appended claims.

### BRIEF DESCRIPTION

For a better understanding of various examples that are useful for understanding the brief description, reference will now be made by way of example only to the accompanying drawings in which:
Fig. 1 illustrates an apparatus;
Fig. 2 illustrates an electronic device comprising an apparatus;
Fig. 3 illustrates a method;
Figs. 4A to 4C illustrate an example of the disclosure;
Figs. 5A to 5F illustrate an example of the disclosure; and
Fig. 6 illustrates an example of the disclosure.

### DETAILED DESCRIPTION

The Figures illustrate an apparatus 1 comprising: processing circuitry 5; and memory circuitry 7 including computer program code 11; the memory circuitry 7 and the computer program code 11 configured to, with the processing circuitry 5, cause the apparatus 1 to, at least in part: detect an object 51 external to the apparatus 1; adapt information 13 to be displayed to a user of the apparatus 1 to correspond to the detected object 51; and enable the information 13 to be displayed to the user so that the displayed information is aligned with the detected object 51.

The apparatus 1 may be configured to enable information to be displayed to a user. The apparatus 1 may be configured to enable information to be displayed on a windscreen, visor or near eye display or any other suitable display surface. Examples of the disclosure provide an apparatus 1 for enabling information 13 to be displayed to a user in a manner which enables a user to concentrate on more than one task simultaneously. For instance, if the user is driving a vehicle the information 13 may be displayed so that the user can focus on both the information 13 and the objects around the vehicle.

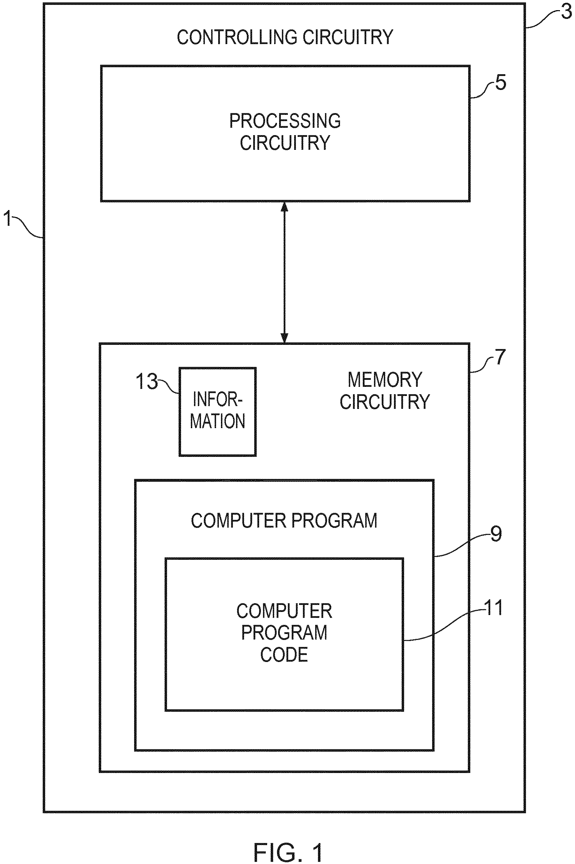

Fig. 1 schematically illustrates an example apparatus 1 which may be used in implementations of the disclosure. The example apparatus 1 of Fig. 1 may be a chip or a chip-set. In some examples the apparatus 1 may be provided within a user device such as a navigation device, communications device such as mobile phone or within a vehicle or within any other suitable device.

The example apparatus 1 comprises controlling circuitry 3. Where the apparatus 1 is provided within a device such as a navigation or communication device the controlling circuitry 3 may enable control of the functions of the navigation or communication device. For instance, where the device is a mobile telephone the controlling circuitry 3 may control the mobile telephone to enable access to cellular communications networks.

The controlling circuitry 3 may comprise one or more controllers. The controlling circuitry 3 may be implemented using instructions that enable hardware functionality, for example, by using executable computer program instructions in a general-purpose or special-purpose processing circuitry 5 that may be stored on a computer readable storage medium (disk, memory etc) to be executed by such processing circuitry 5.

The processing circuitry 5 may be configured to read from and write to memory circuitry 7. The processing circuitry 5 may comprise one or more processors. The processing circuitry 5 may also comprise an output interface via which data and/or commands are output by the processing circuitry 5 and an input interface via which data and/or commands are input to the processing circuitry 5.

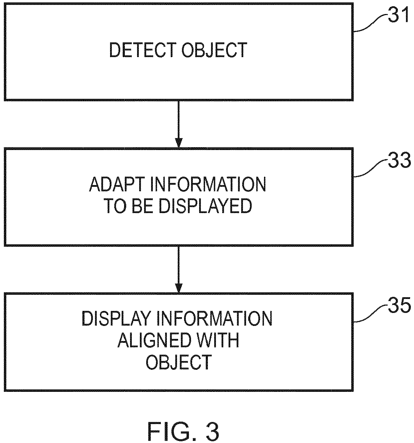

The memory circuitry 7 may be configured to store a computer program 9 comprising computer program instructions (computer program code 11) that controls the operation of the apparatus 1 when loaded into processing circuitry 5. The computer program instructions, of the computer program 9, provide the logic and routines that enables the apparatus 1 to perform the example methods illustrated in Fig. 3. The processing circuitry 5 by reading the memory circuitry 7 is able to load and execute the computer program 9.

In the example apparatus 1 of Fig. 1 information 13 may be stored in the memory circuitry 7. The information 13 may be retrieved from the memory circuitry 7 and used by the processing circuitry 5 in some of the examples of the disclosure. In some examples the apparatus 1 may be configured to enable the information 13 to be displayed to a user. The apparatus 1 may be configured to adapt the information 13 before it is displayed to a user.

The information 13 may comprise any suitable information. In some examples the information 13 may comprise information which is selected by a user of the apparatus 1. For instance the user may indicate particular content or type of content which they would like to view. In some examples the information 13 may comprise information which is selected by an entity other than the user of the apparatus. For example the apparatus 1 may be configured to receive information 13 from other users or network services which may be of use and/or of interest to the user of the apparatus 1.

The apparatus 1 therefore comprises: processing circuitry 5; and memory circuitry 7 including computer program code 11; the memory circuitry 7 and the computer program code 11 configured to, with the processing circuitry 5, cause the apparatus 1 at least to perform: detecting an object 51 external to the apparatus 1; adapting information 13 to be displayed to a user of the apparatus 1 to correspond to the detected object 51; and enabling the information 13 to be displayed to the user so that the displayed information is aligned with the detected object 51.

The computer program 9 may arrive at the apparatus 1 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), an article of manufacture that tangibly embodies the computer program. The delivery mechanism may be a signal configured to reliably transfer the computer program 9. The apparatus 1 may propagate or transmit the computer program 9 as a computer data signal.

Although the memory circuitry 7 is illustrated as a single component in the figures it is to be appreciated that it may be implemented as one or more separate components some or all of which may be integrated/removable and/or may provide permanent/semi-permanent/ dynamic/cached storage.

Although the processing circuitry 5 is illustrated as a single component in the figures it is to be appreciated that it may be implemented as one or more separate components some or all of which may be integrated/removable.

References to "computer-readable storage medium", "computer program product", "tangibly embodied computer program" etc. or a "controller", "computer", "processor" etc. should be understood to encompass not only computers having different architectures such as single/multi- processor architectures and sequential (Von Neumann)/parallel architectures but also specialized circuits such as field-programmable gate arrays (FPGA), application specific integrated circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

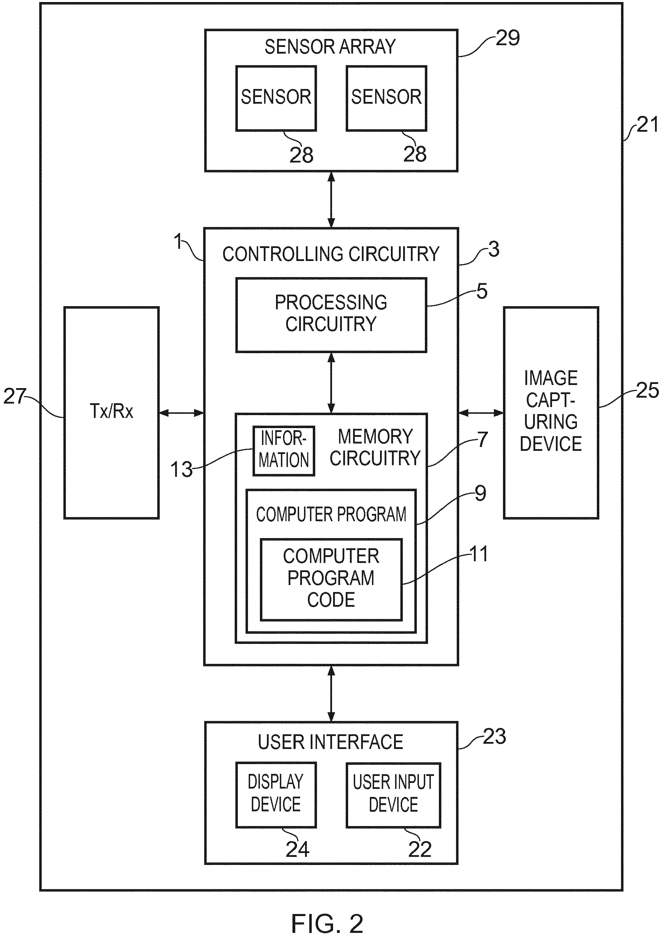

Fig. 2 schematically illustrates an electronic device 21 comprising an apparatus 1 as described above. Corresponding reference numerals have been used for corresponding features. The electronic device 21 of Fig. 2 also comprises a user interface 23, an image capturing device 25, a transceiver 27 and a sensor array 29. It is to be appreciated that only features necessary for the following description have been illustrated in Fig. 2 and that other examples may comprise additional features.

The electronic device 21 may comprise any electronic device 21 which may be used to enable information 13 to be displayed to a user. In some examples the electronic device 21 may comprise a portable user device. For example, the electronic device 21 may be a device such as a mobile telephone or a navigations device. In some examples the electronic device 21 may comprise a wearable device such as a headset or a near eye display. In some examples the electronic device 21 may be provided within a vehicle. In such examples the components of the electronic device may be distributed in different positions around the vehicle.

In the example of Fig. 2 the user interface 23 may comprise any means which enables a user to interact with the electronic device 21. The user interface 23 may be configured to provide outputs to the user and enable a user to make user inputs. In some examples the user interface 23 may comprises a display device 24 and a user input device 22.

The display device 24 may comprise any means which may enable information 13 to be displayed to a user. In some examples the display device 24 could be a physical display such as a near eye display which may be configured to render information 13 so that it can be viewed by the user. In other examples the display device 24 may comprise means for projecting an image on to another object. For example the display device 24 may be configured to project an image on to an object such as the windscreen or other window of a vehicle. In some examples the display device 24 may be configured to project an image onto a visor or other part of a helmet which may be worn by someone riding a vehicle such as a motorbike. It is to be appreciated that the display device 24 may be configured to project the image onto any other suitable objects in other examples of the disclosure.

The information 13 which is displayed by the display device 24 may comprise information 13 which may be stored in the memory circuitry 7. The information 13 which is displayed by the display device 24 may be adapted before it is displayed by the display device 24. Examples of how the information 13 may be adapted are described below.

The user input device 22 may comprise any means which enables a user to input information into the electronic device 21. The information may be used to control the electronic device 21. In some examples the user input device 22 may comprise a touch pad, a gesture recognition device, gaze tracking device or any other suitable means.

The gesture recognition device may comprise any means which may be configured to detect and identify specific movements of the user and enable the identified movements to be used control the electronic device 21. For example the gesture recognition device may be configured to detect the position and/or movement of a user's hand. In some examples electronic device 21 may be configured to associate the position and/or movement of the hand with an object 51 external to the apparatus 1 and electronic device 21. This may enable a user to select such objects 51 by pointing or gesturing towards them. It is to be appreciated that other gestures and other control commands may be detected and implemented in examples of the disclosure.

In some examples the user input device 22 may be integrated within the display device 24 to provide an interactive display device 24. For instance where the display device 24 is configured to project the information 13 onto another object such as a windscreen the user input device 22 may be configured to detect a user touching or gesturing towards the displayed image.

In the example of Fig. 2 only one display device 24 and one user input device 22 are illustrated. It is to be appreciated that in other examples more than one display device 24 and/or user input device 22 may be provided. The different display devices 24 and user input devices 22 may be different types of devices and/or may be positioned in different positions within the electronic device 21. For instance where the electronic device 21 is provided within a vehicle a first touch screen display device 24 may be provided in the dash board of the vehicle but a second display device 24 may be configured to display information on to the windscreen.

The transceiver 27 may comprise one or more transmitters and/or receivers. The transceiver 27 may comprise any means which enables the electronic device 21 to receive information 13. The transceiver 27 may enable the electronic device 21 to receive selected information 13 from an entity other than the user of the apparatus. For instance, the transceiver 27 may enable the electronic device 21 to receive information from an object that has been detected by the apparatus 1. In some examples the transceiver 27 may enable the electronic device 21 to receive information from an entity which is associated with an object that has been detected by the apparatus 1.

In some examples the transceiver 27 may also enable information to be transmitted by the electronic device 21. The transceiver 27 may enable a wireless connection between the apparatus 1 and another entity. The wireless connection could be a cellular connection, a WiFi connection, a Bluetooth connection or any other suitable connection.

The example electronic device 21 of Fig. 2 also comprises an image capturing device 25. The image capturing device 25 may comprise any means which enables the electronic device 21 to obtain images. The image capturing device 25 may comprise an image sensor which may be configured to convert light incident on the image sensor into an electrical signal to enable an image to be produced. The image sensors may comprise, for example, digital image sensors such as charge-coupled-devices (CCD) or complementary metal-oxide-semiconductors (CMOS). The images which are obtained may provide a representation of a scene and/or objects which are positioned in front of the image capturing device 25.

The image capturing device 25 may be configured to enable objects 51 external to the apparatus 1 and electronic device 21 to be detected. In some examples the image capturing device 25 may enable the objects 51 to be identified. In some examples the image capturing device 25 may enable characteristics of the detected object 51 to be identified. The characteristics may comprise attributes such as the colour and surface decoration, size, shape or position of features within an object 51, the distance between the object 51 and the electronic device 21, the speed at which the object 51 is moving or any other suitable characteristic. In such examples the processing circuitry 5 may be configured to retrieve an electrical signal comprising image data from the image capturing device 25 and analyse the image data to detect the objects 51 and/or identify characteristics of the objects 51.

In some examples the electronic device 21 may also comprise a sensor array 29. The sensor array may comprise one or more sensors 28. The one or more sensors 28 may comprise any means which may enable objects 51 external to the apparatus 1 and electronic device 21 to be detected. For instance, in some examples the sensors 28 may comprise positioning sensors which may be configured to detect the position of the object 51. The positioning sensors may comprise any suitable sensors such as infra-red, ultra sound or any other suitable type of sensors.

The sensors 28 may be configured to detect the position of an object 51 relative to the apparatus 1 and/or electronic device 21, the speed and direction in which the object 51 is moving, the size and shape of the object 51 and or any other suitable information about the object 51 that may be useful to obtain. In some examples the image capturing device 25 may be used as a sensor 28 to detect the object 51.

Fig. 3 illustrates a method. The example method of Fig. 3 may be implemented using the apparatus 1 and/or electronic device 21 as described above. The method comprises detecting, at block 31, an object external to an apparatus 1. The method also comprises, at block 33, adapting information 13 to be displayed to a user of the apparatus 1 to correspond to the detected object and, at block 35, enabling the information 13 to be displayed to the user so that the displayed information is aligned with the detected object 51.

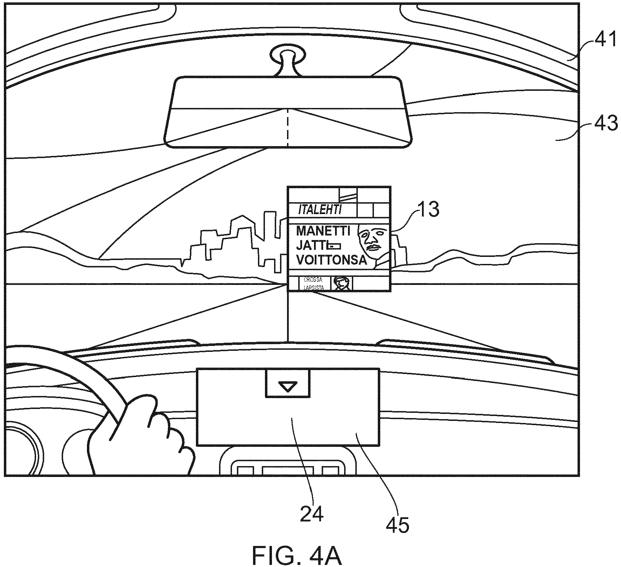

Figs. 4A to 6 illustrate example implementations of the disclosure which may implement such methods. In the examples of Figs. 4A to 6 the apparatus 1 is provide within a vehicle 41 so that the user can view information 13 while travelling in the vehicle 41.

In Figs. 4A to 4C illustrate a view that a user may have as they are driving a vehicle 41. In the examples of Figs. 4A to 4C the vehicle 41 may be a car or a van or any other suitable type of vehicle 41 which comprises a windscreen 43.

The electronic device 21 may comprise a display device 24 which may be configured to enable information 13 to be displayed on the windscreen 43. This enables the driver of the vehicle 41 to view the information 13 without having to glance down at the dashboard or at a physical display of the electronic device 21.

The example electronic device of Figs. 4A to 4C also comprises a second display device 24. In the example of Figs. 4A to 4C the second display device 24 comprises a touch sensitive display 45 which is provided in the dashboard of the vehicle 41. The touch sensitive display 45 is positioned so that the user can easily make user inputs by touching or gesturing towards the touch sensitive display 45. In some examples the electronic device 21 may comprise other user input devices 22 such as a gesture recognition device.

In the example of Fig. 4A the information 13 which is displayed comprises newspaper content. It is to be appreciated that any other type of information 13 may be provided in other examples of the disclosure. For instance the information 13 could comprise map or navigation information which may be provided by a navigations system. In some examples the information 13 may comprise information 13 relating to an entertainment system such as an audio system which may be provided within the vehicle 41. In such examples the information 13 may include information about audio tracks that are being played within the vehicle 41. In some examples the information 13 may comprise information 13 relating to the vehicle 41. For instance the information 13 could include information 13 such as the speed at which the vehicle 41 is travelling or any other suitable information which may be of interest to the user.

The user may be able to select which information 13 is displayed by the display device 24. The user may be able to make user inputs via the user input devices 22 to select which information 13 is displayed by the display device 24. The user may be able to change the information 13 that is displayed.

The vehicle 41 may comprise sensors 28 which may be configured to detect whether or not an object 51 is currently positioned external to the vehicle 41. The sensors 28 may be positioned on the outside of the vehicle 41 and so are not illustrated in Figs. 4A to 4C as they are not in the field of view of the user.

In the example of Fig. 4A there are no suitable objects 51 currently positioned external to the vehicle 41. In response to determining that no suitable objects 51 are positioned external to the vehicle 41 the information 13 is displayed in a default position on the windscreen 43. The default position may be determined by tracking the gaze of the user to ensure that the user is always able to view the road as well as the information 13. In some examples the default position may be defined in settings of the electronic device 21. A user may be able to define and/or adjust the settings to enable the default position to be adjusted. This may enable the information 13 to be provide to different users of having different heights.

When the information 13 is displayed in the default position it may be displayed in a default configuration. For instance the size and/or shape of the information 13 may be a predetermined shape. Features such as the colours, contrast and transparency of the information 13 may be adjusted to take into account the current ambient light levels and/or other factors that may affect the user's ability to view the information 13.

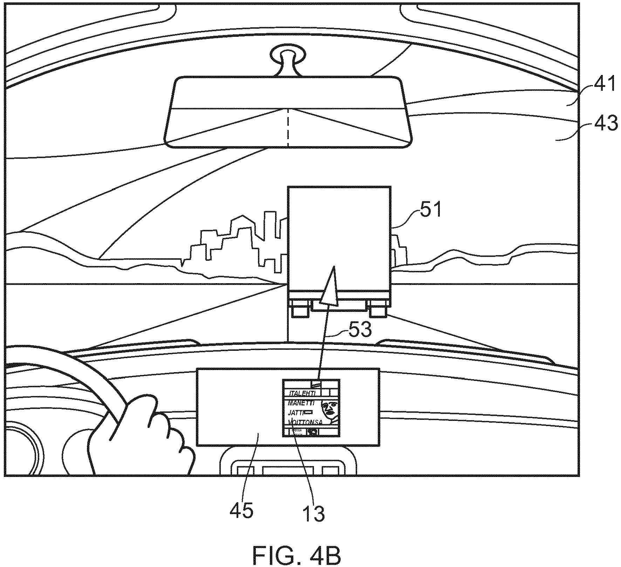

In Fig. 4B an object 51 is detected in front of the vehicle 41. In the example of Fig. 4B the object comprises a vehicle such as a lorry which is travelling in front of the vehicle 41. In the example of Fig. 4B the lorry is travelling in the same lane as the vehicle 41. It is to be appreciated that other objects may be detected in other examples of the disclosure.

The apparatus 1 may be configured to use information obtained by the sensors 28 and image capturing devices 25 to determine whether the object 51 is a suitable object to align with the displayed information 13. For instance the apparatus 1 may be configured to determine the size of the object 51, the distance between the vehicle 41 and the object 51, the speed and/or direction in which the object 51 is travelling or any other suitable factor.

In some examples once a suitable object 51 has been detected the information 13 may be adapted to correspond to the detected object 51 and then displayed to the user so that the displayed information 13 is aligned with the detected object 51.

In some examples the information 13 may be adapted and aligned with the detected object 51 automatically in response to the detection of the suitable object. That is, in some examples no user input is required to adapt and align the information 13 once the suitable object 51 has been detected.

In other examples the information 13 may be adapted and aligned in response to a user input. For instance, in the example of Fig. 4B the user may make a gesture input which may start on the touch sensitive display 45 in the position where the information 13 is displayed. The gesture then extends towards the direction of the current location of the object 51 as indicated by the arrow 53. In response to this gesture input the information 13 is adapted and aligned with the object 51.

In the example of Fig. 4B only one piece of information 13 and one object 51 are available. In other examples a plurality of pieces of information 13 may be provided and a plurality of objects 51 may be detected. In such examples the user inputs may be used to enable the user to select which information 13 is to be aligned with which objects 51. In such examples the direction in which the user extends a gesture may determine the object 51 which is selected. Such user inputs may be simple for a user to make while they are driving so that the user is not unnecessarily distracted from the task of driving. Such user inputs may also be intuitive for the user to make as it is easy to understand how to select the information 13 and objects 51.

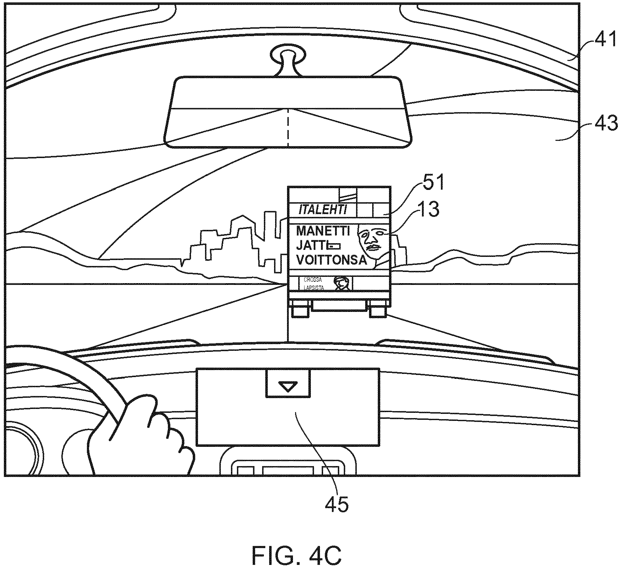

Fig. 4C illustrates the view the user has after the information 13 has been adapted and aligned with the object 51.

In the example of Fig. 4C the information 13 has been adapted so that it appears to be the same size and shape as the object 51. In the example of Fig. 4C the lorry has a rectangular shape and so the information 13 is displayed on the windscreen 43 in a rectangle with corresponding dimensions.

The apparatus 1 may be configured to determine the apparent size of the lorry in the view of the user. The apparent size of the lorry may be determined by determining the actual size of the lorry and the distance between the lorry and the vehicle 41.

The information 13 may also be configured to adapt the opaqueness of the information 13 to correspond to the detected object 51. For instance the colour and any surface decoration on the object 51 may be detected. The colour and any surface decoration on the object 51 may be detected using any suitable means such as image recognition. The information 13 may be adapted so that it can be clearly viewed when overlaying the object 51. For instance if the rear of the lorry is substantially one colour then the information 13 can be displayed in a transparent manner so that the object 51 may be visible through the information 13. If the rear of the lorry has surface decorations, such as images or writing or dirt then the information 13 may be displayed in an opaque manner so that the object 51 is not visible through the information 13.

In some examples the content of the information may be adapted in dependence on the object that is detected. For instance, if the lorry is associated with a particular type of goods then the information 13 which is displayed may be adapted to provide information relating to those goods. For instance, if the lorry relates to a food company then the information 13 could include an indication to the user of the nearest outlet that provides such food. In such examples the information 13 which is displayed may be transmitted to the electronic device 21. The information 13 may be selected by an entity other than the user and transmitted by the object 51 or by an entity associated with the object 51.

The information 13 may be displayed so that it appears to be aligned with the object 51. In the example of Fig. 4C the apparatus 1 may be configured to determine the position of the lorry relative to the vehicle 41 and control the position at which the information 13 is displayed on the windscreen 43 so that it appears to be aligned with the lorry 51. To ensure that the information 13 is aligned correctly the apparatus 1 may be configured to monitor the gaze of the user or the position of the user's head and adjust the position of the displayed image accordingly.

The information 13 may be displayed dynamically so that the position of the information 13 may change to ensure that it remains aligned with the position of the object 51. The apparatus 1 may be configured to monitor changes in the relative positions of the vehicle 41 and the lorry and adjust the position of the displayed information 13 accordingly. In some examples apparatus 1 may be configured to monitor changes in position of the user and/or the gaze of the user and adjust the position of the displayed information 13 accordingly.

The examples of Figs. 4A to 4C describe how information 13 may be displayed to the driver of the vehicle 41. It is to be appreciated that the same methods may be used to enable information to be displayed to a passenger of the vehicle 41. The information 13 which is displayed to the passenger may be the same or different to the information which is displayed to the driver. The information 13 which is displayed to the passenger may be displayed so that it appears to be aligned with an external object from the point of view of the passenger. In such examples the apparatus 1 may comprise means for enabling displaying first information 13 to a first user in the vehicle 41 and enabling displaying second information to a second user in the vehicle 41.

In the example of Fig. 4A no suitable object has been detected and the information 13 is displayed in a default position. In some examples when no suitable object is positioned the information 13 may be displayed in a fixed position on the windscreen 43. In other examples a virtual vehicle may be displayed and the information 13 could be aligned with the virtual vehicle. This virtual vehicle may follow the road ahead of the user and so may provide an avatar which the user can follow. In some examples the virtual truck may assist the user with navigation. For example the virtual truck may implement directions provided by a navigation system so that the driver of the vehicle can navigate by following the virtual truck.

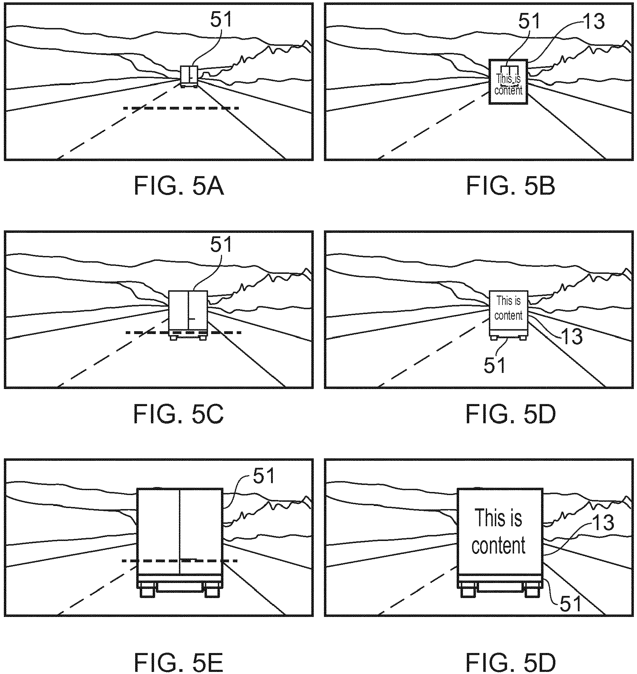

Figs. 5A to 5F illustrate an example of the disclosure which shows how the information 13 which is displayed may be changed as the distance between an object 51 and the user changes.

In the examples of Figs. 5A to 5F the user could be a driver or passenger of a vehicle 41 or a user riding a motorbike or any other suitable user.

In Fig. 5A the object 51 is detected. In the example of Figs. 5A to 5F the object is another vehicle such as a lorry.

The apparent size of the lorry may be determined by detecting the distance between the user and the lorry and the actual size of the lorry. This gives an indication of how big the lorry appears to the user. Other methods of determining the size of the lorry may be used in other examples of the disclosure.

In Fig. 5B the information 13 is displayed so that it appears aligned with the detected object 51. The information 13 is displayed so that it appears at the same position in the user's field of view as the lorry.

In the example of Figs. 5A and 5B the distance between the lorry and the user is such that the lorry appears too small to enable the information 13 to be displayed the same apparent size as the lorry. In such examples the information may be displayed in a default minimum size. The default minimum size may be such that the user can easily view the information. For instance the default minimum size may enable a user to easily read and text which may be displayed in the information 13.

In Fig. 5C the user has moved closer to the lorry so that the distance between the lorry and the user has decreased. The lorry now appears larger in the field of view of the user. In Fig. 5D the information 13 is displayed so that it appears aligned with the lorry. However as the lorry is now larger in the field of view of the user the information 13 can now be adapted so that it appears to be the same size as the lorry. The size and shape of the information 13 on the display may be adapted to correspond to the size and shape of the lorry in the user's field of view.

In Fig. 5E the user has moved even closer to the lorry so that the distance between the lorry and the user has decreased even further. The lorry now appears even larger in the field of view of the user. In Fig. 5F the information 13 is still displayed so that it appears aligned with the lorry. However as the lorry is now even larger in the field of view of the user the information 13 is also displayed larger by the display device 24.

The examples of Figs. 5A to 5E show how the information 13 may be adapted as the distance between a user and an object 51 changes. The examples of the disclosure may also be configured to dynamically adapt the information 13 which is displayed if the object 51 changes position or moves away from the user.

For instance, in the examples of Fig. 5A to 5E the lorry is in the same lane as the user. If either the user or the lorry changes lanes then the lorry will no longer be positioned directly in front of the user. In some such examples the apparatus 1 may be configured to change the position at which the information 13 is displayed so that it still appears aligned with the lorry. In other examples the apparatus 1 may be configured to detect a different object 51 which is positioned directly in front of the user and may enable the information 13 to be displayed so that it is aligned with the different object. If no suitable replacement object is detected the apparatus 1 may be configured to enable the information to be displayed in a default position.

In some examples the information 13 may be adapted whenever a change in the position of the object 51 is detected. In some instances this may be confusing for the user, for instance in filter lanes or busy traffic where the relative position of vehicles are changing a lot. In such examples the information 13 may only be adapted at certain time intervals to avoid confusing the user.

In some examples the scale of the information 13 which is displayed may be used to provide information to the user. For instance if it is determined that the vehicle 41 that the user is driving is too close to the object 51 in front, the scale of the information 13 could be increased to a point at which it is no longer clear to the user. This provides an indication to the user that they are too close to the object 51 and encourages them to increase the distance between themselves and the object 51. The threshold at which the user may be considered to be too close to the object 51 may depend on factors such as the speed at which the vehicle 41 and object 51 travelling, weather conditions or any other suitable factor.

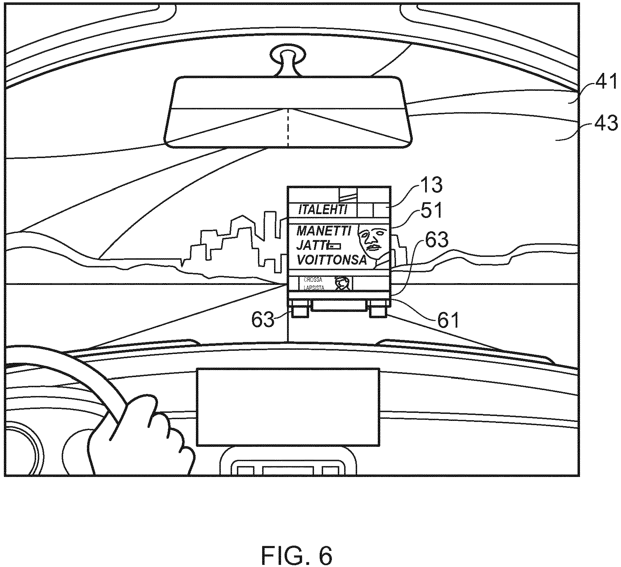

Fig. 6 shows an example of the disclosure where the information 13 which is displayed comprises control elements 61. The control element 61 may comprise sections which can be selected by a user to enable a user input to be made.

In some examples the position of the control elements 61 may be adapted to correspond to the object 51 that has been detected. For instance, in the example of Fig. 6 the detected object 51 comprises a vehicle such as a lorry. The control elements 61 are arranged to be displayed so that they appear to be overlaying the lights 63 of the lorry. This may enable the control elements 61 to be clearly visible to the user which may make it easy for the user to select them.

In the example of Fig. 6 one control element 61 is provided so that it appears to be overlaying the right rear light of the lorry. It is to be appreciated that more than one control element 61 may be provided in other examples of the disclosure.

A gesture detector or other suitable user input device 22 may be configured to detect a user selecting the control elements 61. For instance an image capturing device 25 may be configured to detect a user touching or gesturing towards the area of the windscreen 43 in which the control element 61 is displayed. The control elements 61 may enable the user to control the electronic device 21 or any other components or functions of the vehicle 41. The functions which are controlled by the control element 61 may be dependent on the information 13 which is displayed on the windscreen 43.

In some examples a gaze tracking device may be used to detect user inputs. For instance the gaze tracking device may be configured to detect that the user is looking at a control element 61. This may enable the control element 61 to be selected by gaze. In such examples the control elements 61 may be associated with functions such as scrolling or enabling view of the next page or a previous page or any other suitable function.

In the examples described above the sensors 28 may be used to determine information about the objects 51 around the apparatus. It is to be appreciated that other means may be used in other examples of the disclosure. For instance smart roads or intelligent roads may be used to identify vehicles and their relative positions. This information about the relative positions of the vehicles may then be provided to an electronic device 21 within a vehicle 41.

In the examples described above the user is driving a vehicle 41 such as a car or van which comprises a windscreen 43. In other examples the user could be operating an aircraft or other similar vehicle which may have a windscreen. In other examples the user might be driving a vehicle such as a motorbike which might not have a windscreen. In such examples the display device 21 may be configured to display the object in a different place. For instance the display device 21 may be configured to display the information on the visor of a helmet or in a near eye display or in any other suitable manner.

Examples of the disclosure as described above provide for an apparatus 1 which enables displayed information to be aligned with external objects 51. This enables a user to view both the information and the external object. This may enable a user to perform two or more tasks at the same time as they can view both the object 51 and the information 13 simultaneously.

As the displayed information may be dynamic, to take into account changes in the relative position between the object and the user, this may enable examples of the disclosure to be suitable for use for people who are travelling. For instance it may be suitable for use for drivers of vehicle 41 or motorcyclists wearing helmets or people walking or running while wearing a near eye display because the user is made aware of the position of the object 51.

Examples of the disclosure may also provide the advantage that they may reduce motion sickness of the passengers within a vehicle 41. As the information 13 may be configured to be aligned with other vehicles the information 13 may be displayed so that it follows the road. This may reduce motion sickness for a user viewing the information.

In the examples described above the object 51 which is detected is another vehicle. It is to be appreciated that other objects may be detected in other examples of the disclosure. For instance, in some examples the detected object may comprise a road sign or other item which may be positioned in the path of the user.

The blocks illustrated in Fig. 3 may represent steps in a method and/or sections of code in the computer program 9. The illustration of a particular order to the blocks does not necessarily imply that there is a required or preferred order for the blocks and the order and arrangement of the block may be varied. Furthermore, it may be possible for some blocks to be omitted.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this detailed description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a subclass of the class that includes some but not all of the instances in the class. It is therefore implicitly disclosed that a features described with reference to one example but not with reference to another example, can where possible be used in that other example but does not necessarily have to be used in that other example.

Although examples of the disclosure have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
means for detecting an object external to the apparatus;
means for adapting information to be displayed to a user of the apparatus to correspond to the detected object; and
means for enabling the information to be displayed to the user so that the displayed information is aligned with the detected object.

2. An apparatus as claimed in claim 1 wherein the apparatus is configured to detect an object external to a vehicle.

3. An apparatus as claimed in any preceding claim wherein the information is displayed on at least one of; a windscreen, a visor, a near eye display.

4. An apparatus as claimed in any preceding claim wherein the information is displayed so that it appears to overlay the detected object.

5. An apparatus as claimed in any preceding claim wherein the detected object comprises a vehicle.

6. An apparatus as claimed in any preceding claim wherein the information is adapted to correspond to the detected object by adapting one or more of, size of information, shape of information, opaqueness of information, content of information.

7. An apparatus as claimed in any preceding claim wherein the information comprises information which is selected by a user or by an entity other than the user.

8. An apparatus as claimed in any preceding claim wherein the information comprises user control elements.

9. An apparatus as claimed in claim 8 wherein the apparatus comprises means for detecting selection of the user control elements

10. An apparatus as claimed in any preceding claim further comprising means for detecting a user input and, in response to the detected user input, selecting an object external to the apparatus and enabling information to be displayed to the user so that the displayed information is aligned with the selected object.

11. An apparatus as claimed in any preceding claim further comprising means for monitoring gaze of user and adjusting position of displayed information in response to the gaze position.

12. An apparatus as claimed in any preceding claim further comprising means for determining that no suitable objects are positioned external to the apparatus and in response enabling the information to be displayed at a default position.

13. An apparatus as claimed in any preceding claim further comprising means for enabling displaying first information to a first user in a vehicle and enabling displaying second information to a second user in the same vehicle.

14. A method comprising:
detecting an object external to the apparatus;
adapting information to be displayed to a user of the apparatus to correspond to the detected object; and
enabling the information to be displayed to the user so that the displayed information is aligned with the detected object.

15. A computer program comprising computer program instructions that, when executed by processing circuitry, enable:
detecting an object external to the apparatus;
adapting information to be displayed to a user of the apparatus to correspond to the detected object; and
enabling the information to be displayed to the user so that the displayed information is aligned with the detected object.
